# EUROPEAN PATENT APPLICATION

(11) **EP 4 763 310 A1**
(43) Date of publication of application: **24.06.2026**
(21) Application number: 24222887.2
(22) Date of filing: 23.12.2024
(51) Int. Cl.: B01D 53/00, B01D 53/04, B01D 53/047

(54) **A SYSTEM FOR DEPOSITION OF DRY ICE FOR MAINTAINING VACUUM DURING DESORPTION IN DIRECT AIR CAPTURE APPLICATIONS**

(71) Applicant: Siemens Energy Global GmbH & Co. KG, 81739 München (DE)
(72) Inventor: Jaksch, Peter, 60211 Norrköping (SE); Hjalmarsson, Christer, 61291 Finspong (SE)

(57) **Abstract**

A method of capturing carbon dioxide for use with a sorbent media includes the steps of configuring the sorbent media to receive a flow of a carbon dioxide containing gas within a pressure vessel, absorbing carbon dioxide from the carbon dioxide containing gas within the sorbent media during an absorption cycle, configuring the pressure vessel to be sealed with at least one lid, configuring the at least one lid to include at least one cryogenic heat exchanger, releasing an amount of carbon dioxide from the sorbent media during a desorption cycle, circulating a first heat transfer fluid through the at least one cryogenic heat exchanger, configuring the temperature and pressure within the pressure vessel to freeze an amount carbon dioxide on a surface of the at least one cryogenic heat exchanger directly as a solid, isolating and capturing the amount of frozen carbon dioxide during a carbon dioxide collection cycle.

## Description

### CROSS-REFERENCE TO RELATED APPLICATIONS

EP 24198934.2

### BACKGROUND

Direct Air Carbon Capture, commonly referred to as DAC, is usually a batch process that consists of two stages: adsorption and desorption. During the adsorption phase a sorbent is exposed to a flow of atmospheric air and allowed to absorb CO₂ from the atmospheric air by blowing air through or around the sorbent as it is housed in a pressure vessel or air contactor, commonly known as a contactor. After a sufficient amount of time (usually around 1 hour) the sorbent has absorbed a sufficient amount of CO₂ to begin the desorption phase. Current sorbents require a desorption process that is endothermic, specifically a supply of heat energy is required to heat the sorbent to release the CO₂ absorbed during the absorption phase. Additionally, the desorption cycle also requires a low partial pressure of CO₂ around the sorbent, this generally requires the sorbent to be in a pressure vessel that allows for purging and or at least a partial vacuum/low pressure.

One way to solve both of these problems is to flow steam through the sorbent or the pressure vessel or contactor used to house the sorbent and cooling/condensing the steam in conjunction with a vacuum system. A life limiting or process limiting factor of current sorbents is that some sorbents degrade quickly in the presence of steam at elevated temperatures. The steam production process is energy intensive and requires a lot of expensive piping to supply the steam to the contactors, particularly due to the fact that stainless steel is usually required for structural requirements and oxidation resistance.

Another option is to use an indirect heating system together with a high-capacity vacuum system. The main drawback of this alternative solution is the need for a large number of high-capacity vacuum pumps, which adds significant cost and complexity to the system. The current invention is a variant of the indirect heating system where CO₂ gas is collected by freezing gaseous CO₂ into solid form, commonly known as dry ice, with a cryogenic cooling system with minimal use of conventional vacuum pumps or conventional pressure reducing methods.

### SUMMARY OF INVENTION

It is therefore a goal of the present invention to provide a cryogenic cooling system for use with a carbon capture process which overcomes the above-mentioned disadvantage(s), specifically the need for high-capacity vacuum pump(s). The present invention overcomes the disadvantages of using indirect heating of the sorbent with a high-capacity vacuum pump by freezing the CO₂ gas directly into a solid (dry ice).

The objective of the invention is achieved by, a method of capturing carbon dioxide for use with a sorbent media in a pressure vessel includes the steps of configuring the sorbent media to receive a flow of carbon dioxide containing gas within a sorbent filter assembly, configuring the pressure vessel to include at least one cryogenic heat exchanger, configuring the sorbent filter assembly to include a plurality of indirect heat transfer channels, absorbing carbon dioxide from the carbon dioxide containing gas within the sorbent media during an absorption cycle, sealing the pressure vessel at the end of the absorption cycle and lowering the pressure within the pressure vessel, heating the sorbent media to a first temperature and operating a vacuum pump until a first pressure, maintaining the first temperature and first pressure until a first amount of water vapor is released from the sorbent media to at least partially purge the pressure vessel, raising the temperature of the sorbent media to a second temperature, raising the pressure within the pressure vessel to a condensation pressure, maintaining the second temperature and condensation pressure until the sorbent media has released a second amount of water vapor, initiating a desorption cycle by increasing the heat transfer rate of the plurality of indirect heat transfer channels to heat the sorbent media at a desorption heat rate, circulating at least a first heat transfer fluid through the at least one cryogenic heat exchanger during the desorption cycle, depositing an amount of frozen carbon dioxide on a surface of the at least one cryogenic heat exchanger, maintaining the desorption heat rate and operation of the at least one cryogenic heat exchanger until a desorption threshold is reached, isolating and capturing the amount of frozen carbon dioxide during a carbon dioxide collection cycle, cooling the sorbent media with the plurality of indirect heat transfer channels.

In an embodiment, a method of capturing carbon dioxide for use with a sorbent media includes the steps of configuring the sorbent media to receive a flow of a carbon dioxide containing gas within a pressure vessel, absorbing carbon dioxide from the carbon dioxide containing gas within the sorbent media during an absorption cycle, configuring the pressure vessel to be sealed with at least one lid, configuring the at least one lid to include at least one cryogenic heat exchanger, releasing an amount of carbon dioxide from the sorbent media during a desorption cycle, circulating a first heat transfer fluid through the at least one cryogenic heat exchanger, configuring the temperature and pressure within the pressure vessel to freeze an amount of carbon dioxide on a surface of the at least one cryogenic heat exchanger directly as a solid, isolating and capturing the amount of frozen carbon dioxide during a carbon dioxide collection cycle.

In an embodiment, the method further includes the steps of configuring the at least one cryogenic heat exchanger to include at least two independent heat exchangers, flowing a first heat transfer fluid through a first heat exchanger during the desorption cycle to freeze an amount of carbon dioxide, flowing a second heat transfer fluid through a second heat exchanger during the carbon collection cycle to heat the frozen carbon dioxide and recover an amount of the heat energy from the frozen carbon dioxide.

In an embodiment, the method further includes the steps of configuring the at least one lid to be moved to a carbon dioxide collection assembly after the desorption cycle, configuring the carbon dioxide collection assembly to include an expansion chamber, sealing the at least one lid against the expansion chamber, configuring the at least one cryogenic heat exchanger to heat the amount of frozen carbon dioxide during a collection cycle to create an amount of carbon dioxide gas within the carbon dioxide collection assembly, configuring a valve to operate and send the amount of carbon dioxide gas out the carbon dioxide collection assembly via the piping to a carbon dioxide storage container after a predetermined set point.

In an embodiment, the method further includes the steps of configuring the second heat transfer fluid and second heat exchanger to recover the heat energy from the amount of frozen carbon dioxide and first heat exchanger.

In an embodiment, the method further includes wherein the first heat transfer fluid is methane.

In an embodiment, the method further includes wherein the second heat transfer fluid is methane.

In an embodiment, the method further includes the steps of configuring the first heat exchanger of a first pressure vessel to supply an amount of heat energy for the desorption cycle of a second pressure vessel by recovering the heat energy of the first pressure vessel by circulating the second heat transfer fluid into the second heat exchanger of the first pressure vessel and then circulating the second heat transfer fluid into the first heat exchanger of the second pressure vessel.

Other technical features may be readily apparent to one skilled in the art from the following figures, descriptions, and claims.

### TERMS AND DEFINITIONS

Unless specified, the terms absorption and adsorption can be used to mean any sorption process. Both can be used to describe DAC processes. In DAC applications, absorption is used to refer to the process by which carbon dioxide is attracted to the sorbent and becomes evenly distributed throughout the whole body of the absorbate material. This is most commonly understood to occur when the sorbent is in the liquid or aqueous state. The term adsorption is used to refer to the process when carbon dioxide is attracted to the sorbent and becomes distributed on the surface of the sorbent. For the purpose of this document the term adsorption has been used. However, this does not imply that absorption cannot also occur.

### BRIEF DESCRIPTION OF THE SEVERAL VIEWS OF THE DRAWINGS

To easily identify the discussion of any particular element or act, the most significant digit or digits in a reference number refer to the figure number in which that element is first introduced.
FIG. 1 illustrates a contactor assembly in accordance with an embodiment of the invention.
FIG. 2A and 2B illustrates a lid for use with a contactor assembly in accordance with an embodiment of the invention.
FIG. 3 illustrates a heat exchanger in accordance with one embodiment.
FIG. 4 illustrates a carbon dioxide collection assembly in accordance with one embodiment.
FIG. 5 illustrates an expansion chamber in accordance with one embodiment.
FIG. 6 illustrates a Pressure Enthalpy diagram of a cryogenic cooling system for use with a contactor assembly in accordance with an embodiment of the invention.
FIG. 7A illustrates a Pressure Enthalpy diagram of a cryogenic cooling system that uses Methane as a heat exchange fluid in accordance with one embodiment.
FIG. 7B illustrates a block diagram of the cryogenic cooling system of Fig. 7A in accordance with one embodiment.

### DETAILED DESCRIPTION

Before any embodiments of the invention are explained in detail, it is to be understood that the invention is not limited in its application to the details of construction and the arrangement of components set forth in this description or illustrated in the following drawings. The invention is capable of other embodiments and of being practiced or of being carried out in various ways. Also, it is to be understood that the phraseology and terminology used herein is for the purpose of description and should not be regarded as limiting.

Various technologies that pertain to apparatus and methods will now be described with reference to the drawings, where like reference numerals represent like elements throughout. The drawings discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged apparatus.

It is to be understood that functionality that is described as being carried out by certain system elements may be performed by multiple elements. Similarly, for instance, an element may be configured to perform functionality that is described as being carried out by multiple elements. The numerous innovative teachings of the present application will be described with reference to exemplary non-limiting embodiments.

Also, it should be understood that the words or phrases used herein should be construed broadly, unless expressly limited in some examples. For example, the terms "including," "having," and "comprising," as well as derivatives thereof, mean inclusion without limitation. The singular forms "a", "an" and "the" are intended to include the plural forms as well, unless the context clearly indicates otherwise. Further, the term "and/or" as used herein refers to and encompasses any and all possible combinations of one or more of the associated listed items. The term "or" is inclusive, meaning and/or, unless the context clearly indicates otherwise. The phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like. Furthermore, while multiple embodiments or constructions may be described herein, any features, methods, steps, components, etc. described with regard to one embodiment are equally applicable to other embodiments absent a specific statement to the contrary.

Also, although the terms "first", "second", "third" and so forth may be used herein to refer to various elements, information, functions, or acts, these elements, information, functions, or acts should not be limited by these terms. Rather these numeral adjectives are used to distinguish different elements, information, functions or acts from each other. For example, a first element, information, function, or act could be termed a second element, information, function, or act, and, similarly, a second element, information, function, or act could be termed a first element, information, function, or act, without departing from the scope of the present disclosure.

Also, unless specified or limited otherwise, the terms "mounted", "connected", "supported", and "coupled" and variations thereof are used broadly and encompass direct and indirect mountings, connections, supports, and couplings. Further, "connected" and "coupled" are not restricted to physical or mechanical connections or couplings.

In addition, the term "adjacent to" may mean: that an element is relatively near to but not in contact with a further element; or that the element is in contact with the further portion, unless the context clearly indicates otherwise. Further, the phrase "based on" is intended to mean "based, at least in part, on" unless explicitly stated otherwise. Terms "about" or "substantially" or like terms are intended to cover variations in a value that are within normal industry manufacturing tolerances for that dimension. If no industry standard as available a variation of 20 percent would fall within the meaning of these terms unless otherwise stated.

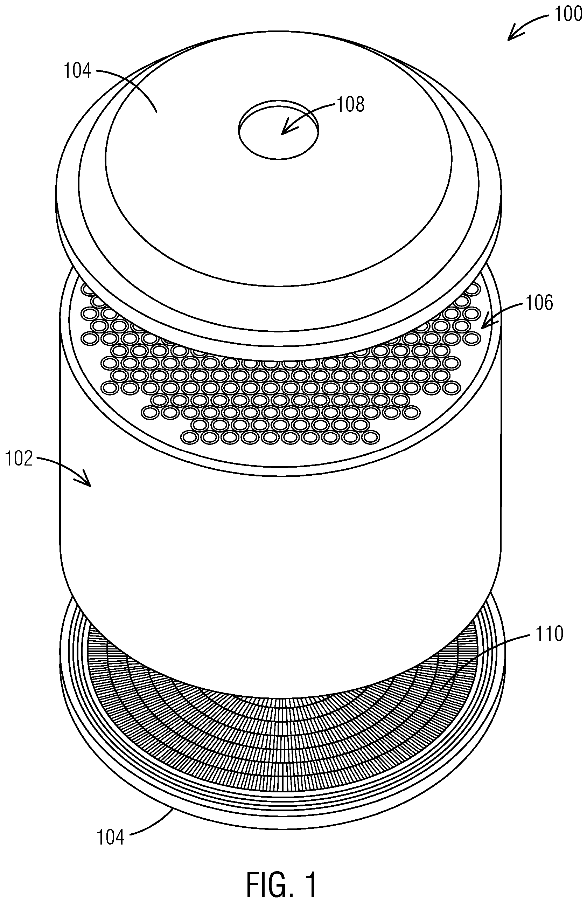

FIG. 1 is an embodiment of a contactor assembly 100. The contactor assembly 100 is a pressure vessel that includes a contactor main body 102 that holds a sorbent filter assembly 106. The sorbent filter assembly 106 can be any known configuration of sorbent media and structural support that allows for indirect heating of the sorbent media within the contactor assembly 100, such as internal fluid passages/channels, electrical resistance heating or any known method suitable to the application. In this embodiment the sorbent filter assembly 106 is an assembly of several individual sorbent filter elements or filters that are cylindrical or conical in shape with interconnected fluid passages that place a heat transfer fluid in indirect contact or proximity with the sorbent media within each individual sorbent filter element of the sorbent filter assembly 106. In this embodiment the sorbent filter assembly 106 is removable to facilitate the replacement of the individual sorbent filter elements, as required by the service life of the sorbent media. The sorbent filter elements can be replaced individually or in bulk by replacing a used sorbent filter assembly 106 with a new/fresh sorbent filter assembly 106. The contactor lids 104 may be removed during the absorption phase and re-installed during the desorption phase to create a sealed pressure vessel.

The contactor lids 104 may include an orifice 108 that allows for the flow of a fluid, such as a carbon dioxide containing gas, through the contactor assembly 100. The orifice 108 may be attached to piping 404 that is configured with a valve 406 that allows for the creation of a pressure vessel within the contactor assembly 100, when the contactor lids 104 are installed and the valve(s) are closed. The orifices 108 can be used to purge the contactor assembly 100, remove CO₂ gas or water vaper, as well as any other applicable process required by a carbon capture process.

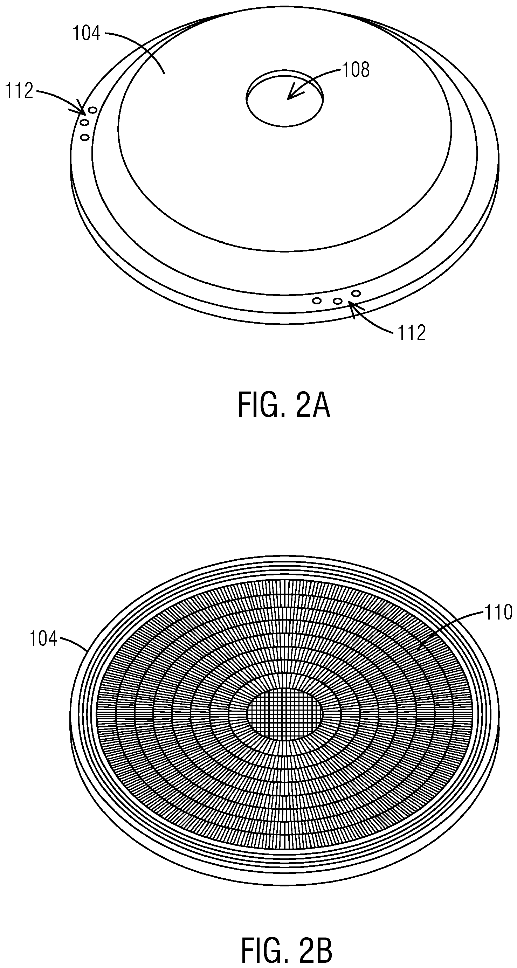

FIG. 2A is an embodiment of a contactor lid 104 that includes a cryogenic heat exchanger 110. In this embodiment the cryogenic heat exchanger 110 is a fin and plate style heat exchanger that uses the inlet/outlet(s) 112 to flow a cryogenic heat exchange fluid through the cryogenic heat exchanger 110. The cryogenic heat exchanger 110 may have multiple independent fluid circuits or heat exchange circuits. The multiple heat exchangers of the cryogenic heat exchanger 110 may be arrange in parallel, in series or any configuration that may overlap. As seen in Fig. 2A, the contactor lid 104 has two sets of inlet/outlets that can accommodate at least two independent heat exchangers, additional inlets/outlets can be added to accommodate additional heat exchange circuits. In this embodiment Methane is used as the heat exchange fluid or refrigerant 114. A cryogenic heat exchanger 110 can be located in one or both contactor lids 104, in embodiments of contactor assemblies 100 with a top and bottom lid 104. In one embodiment a contactor assembly 100 only has a single contactor lid 104 configured to include a cryogenic heat exchanger 110, and the other contactor lid 104 does not include a cryogenic heat exchange 104. In this embodiment the cryogenic heat exchanger 110 is only located on the bottom contactor lid 104.

FIG. 2B is a view of the opposite side or interior side of the contactor lid 104 seen in FIG. 2A. The contactor lid 104 includes a set of inlet/outlets 112 to facilitate the flow of a heat exchange fluid 114 or refrigerant through the contactor lid 104 and into the cryogenic heat exchanger 110 within. In this embodiment the cryogenic heat exchanger 110 is a plate and fin style heat exchanger but any known configuration of heat exchanger can be used within the contactor lid 104.

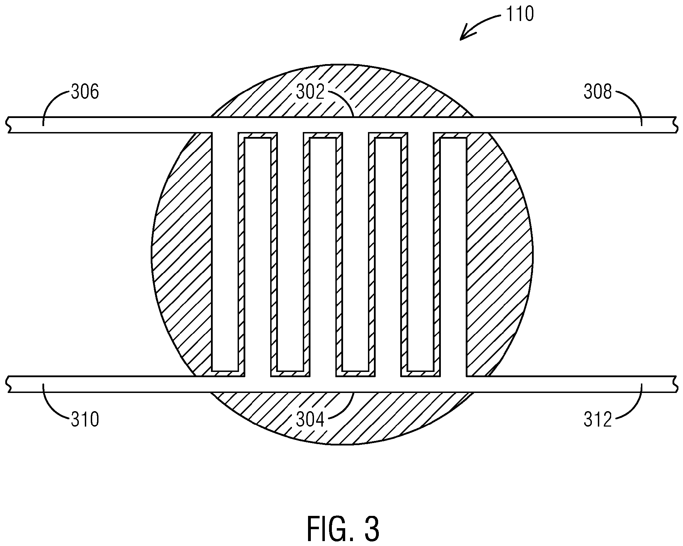

Each cryogenic heat exchanger 110 may include two or more independent heat exchangers that can circulate different heat exchange mediums through the cryogenic heat exchanger 110, see FIG. 3. A simplified example of a pair wise cryogenic heat exchanger 110 can be seen in FIG. 3, which includes a heat exchanger A 302 and heat exchanger B 304. The heat exchangers can be manufactured by any known method, including additive manufacturing. The heat exchangers can be configured to overlap as seen in FIG. 3 or any known overlapping configuration can be utilized to maximize heat transfer between the heat exchangers.

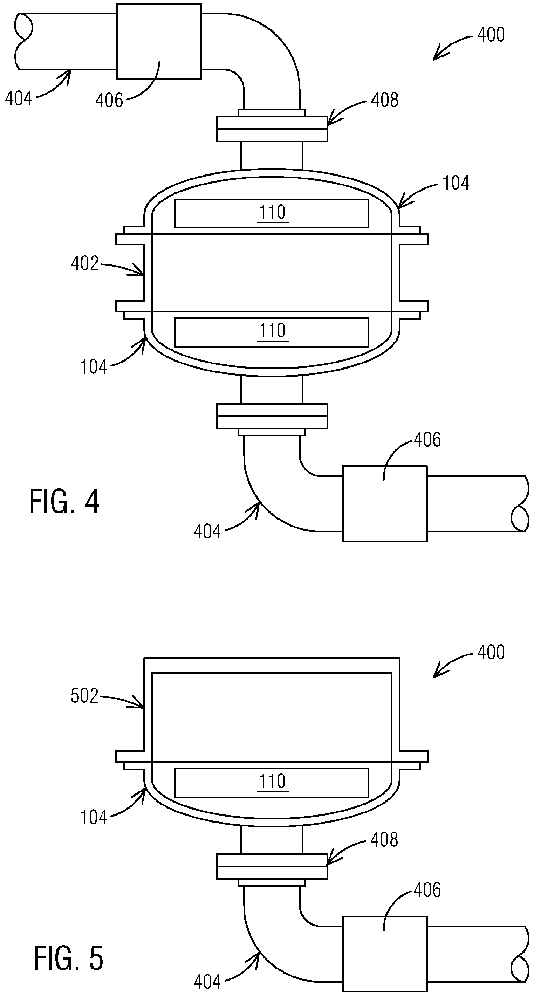

In one example dry ice can be formed on heat exchanger A 302 of a cryogenic heat exchanger 110 during the desorption phase while a first heat transfer fluid is circulated through heat exchanger A 302, in this embodiment Methane. In one embodiment, once a maximum amount or predetermined amount of dry ice has formed on the cryogenic heat exchanger 110, the contactor lid 104 or contactor lids 104 that include a cryogenic heat exchanger 110 are moved to a carbon dioxide collection assembly 400, see FIG. 4. The carbon dioxide collection assembly 400 replaces the contactor main body 102 with an expansion chamber 402. The contactor lids 104 are sealed against the expansion chamber 402 and create a pressure vessel. Once the carbon dioxide collection assembly 400 is sealed, a second heat transfer fluid can be circulated through heat exchanger B 304. The second heat transfer fluid would be cooled by the first heat transfer fluid and recover an amount of the heat energy used to create the dry ice. In one embodiment, the second heat transfer fluid is also Methane. The contactor lids 104 are attached to piping 404 which include valves 406 which seal off the carbon dioxide collection assembly 400. After the dry ice has been evaporated the CO₂ gas can be circulated to a storage container by opening one or more of the valves 406. The contactor main body 102 can return to the absorption phase or can require additional conditioning, such as drying of the sorbent media. Depending on the configuration of the DAC unit, the contactor main body 102 can be in a stationary location during the adsorption and desorption processes as well as the other processes required by a DAC unit. In other embodiments the contactor main body 102 may be moved to facilitate the various processes required by a DAC unit.

FIG. 5 is an embodiment of a carbon dioxide collection assembly 400 with an expansion chamber 502 configured to mate with a single contactor lid 104 containing a cryogenic heat exchanger 110.

In one embodiment of the present invention, the process or method of freezing of CO₂ gas into dry ice is similar to the process that occurs inside a normal household refrigerator. To reduce the temperature within the refrigerator, a coolant flows through a series of cooling channels or passages within a heat exchanger, particularly a plate and fin style heat exchanger. The channels have a large number of fins attached to their exterior in order to increase surface area exposed to the exterior surroundings and thus increase the amount of heat transfer between the heat exchanger and the surroundings. Over time, water vapor inside the refrigerator will deposit on the cooling fins, freeze as a layer of ice on the fins, and render the fins less efficient. This is why defrosting must be performed on a regular basis to remove the ice deposited on the fins in a refrigerator.

In the present invention, the temperature and pressure are much lower, and the creation of dry ice or frozen CO₂ is an intentional design feature or benefit of the present invention. A heat transfer fluid or refrigerant is circulated through the cryogenic heat exchanger 110 during the desorption process of a carbon capture unit or DAC unit. Specifically, in a carbon capture unit that uses indirect heating to increase the temperature of the sorbent media to cause the release of CO₂ gas and water vapor. When CO₂ gas is released inside of a sealed contactor assembly 100, the cryogenic heat exchanger 110 will cause dry ice (frozen CO₂) to form on the fins of the cryogenic heat exchanger 110 without the need for significantly reducing the partial pressure of CO₂ with a vacuum pump or with significantly less reliance on a conventional vacuum pump. In one embodiment a vacuum pump is operated during the desorption phase to assist in the formation of dry ice on the cryogenic heat exchanger 110.

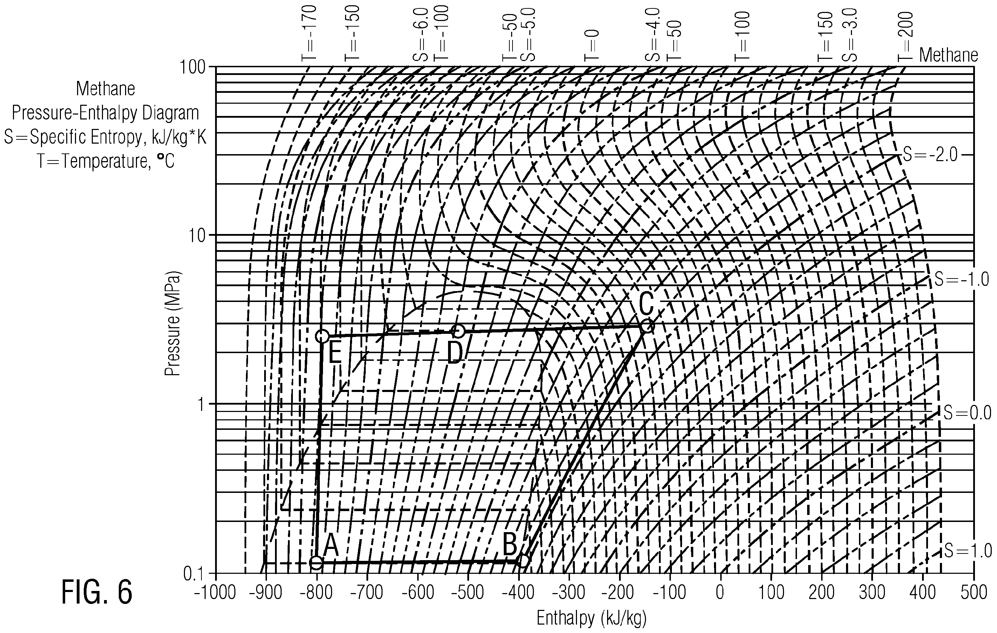

The present invention or process has two stages: freezing and defrosting of CO₂. In this embodiment liquid Methane is used as the coolant/refrigerant due to the pressure and temperatures required by the carbon capture process, but other refrigerants are possible. During the freezing stage liquid Methane at 1 bar(a) (-160°C) is circulated through the cooling channels located in the cryogenic heat exchanger 110 in the contactor lid(s) 104. In other embodiments the cooling channels can be machined into the contactor lid 104 or be a separate cold plate or cryogenic heat exchanger 110 attached to the contactor lid 104 or be incorporated into the contactor lid 104 or contactor main body 102 by an additive manufacturing process. The freezing stage or process is represented by the line AB in the enthalpy diagram seen in FIG. 6. Assuming a 10°C temperature drop over the cryogenic heat exchanger 110 or cold plate, the CO₂ will condense directly as a solid or dry ice on the exterior surface of the fins of the cryogenic heat exchanger 110 or cold plate and will have a temperature of -150°C. The vapor pressure of CO₂ at this temperature, -150°C, is around 10 Pa. At point B in the diagram the liquid methane has turned into saturated gas.

In embodiments that incorporate heat recovery, methane is circulated through as the first heat transfer fluid, through exemplary heat exchanger A 302. After dry ice has formed on heat exchanger A 302 of the cryogenic heat exchanger 110, the contactor lids 104 and cryogenic heat exchanger 110 can then be moved to a carbon dioxide collection assembly 400. In embodiments where a specialized carbon dioxide collection assembly 400 is utilized, the contactor lid 104 or contactor lids 104 that include a cryogenic heat exchanger 110 are mated with an expansion chamber 402 to create a pressure vessel. In embodiments were only one contactor lid 104 include a cryogenic heat exchanger 110 the expansion chamber 502 needs to only have one opened end. During the CO₂ capture process the dry ice on the cryogenic heat exchanger 110 is heated to cause sublimation.

Each cryogenic heat exchanger 110 may include two or more independent heat exchangers that can circulate different heat exchange mediums through the cryogenic heat exchanger 110, see FIG. 3. A simplified example of a pair wise cryogenic heat exchanger 110 can be seen in FIG. 3, which includes a heat exchanger A 302 and heat exchanger B 304. In one example dry ice can be formed on heat exchanger A 302, once moved to the carbon dioxide collection assembly 400, a second heat transfer fluid can be circulated through heat exchanger B 304. The second heat transfer fluid would be cooled by the first heat transfer fluid and recover an amount of the heat energy used to create the dry ice. In one embodiment Methane is used as both the first and second heat transfer fluids.

On the next point on the enthalpy diagram (FIG. 6), point B, a methane compressor increases the pressure of the methane gas to 26 bar. This may be done in several stages with intercooling between. After compression the methane is in gas phase at point C in the enthalpy diagram (FIG. 6).

When gaseous methane is used for cooling recovery, as the second heat transfer fluid, the contactor assemblies 100 can be used pairwise, in a series or other known configuration. When one contactor assembly 100 freezes CO₂ the other contactor assembly 100 undergoes energy recovery. When the process finishes the two chambers swap places. When recovering energy, the gaseous CO₂ will partly liquify at point D in the enthalpy diagram. The methane will be at -100 C at this point. Assuming the same heat exchanger pressure drop as before the temperature on the CO₂ side will be -110 C. The CO₂ sublimation pressure at this temperature is around 0.04 bar. This pressure needs to be maintained by a vacuum pump as the dry ice outgasses CO₂. However, this pressure is relatively high, and the volume flow of CO₂ is not very high, so a small vacuum pump will be sufficient to assist in the circulation of CO₂ during the recovery and capture process.

Perfect energy recovery is not possible, so some additional sub-cooling is needed to reach point E in the enthalpy diagram. By letting the sub-cooled Methane pass through a throttling or expansion valve will return the process to point A and the process is ready to be repeated. The energy required for evaporation of 1 kg of methane is -500 kJ. This is almost the same as the energy released by freezing 1 kg of CO₂ (571 kJ). The total energy requirements for the cryogenic process, per tonne of CO₂ can be estimated easily as the energy required for production of 1.15 tonne of liquid natural gas (LNG) or Methane. In literature this number is estimated to be around ~300 kWh electricity (~500 kWh without heat recovery). However, this energy consumption does not assume the energy recovery implemented in the current method. It seems plausible that the total energy requirement per tonne of CO₂ produced can be brought down to the range 100 - 200 kWh electricity per tonne of CO₂ for the cryogenic process proposed here.

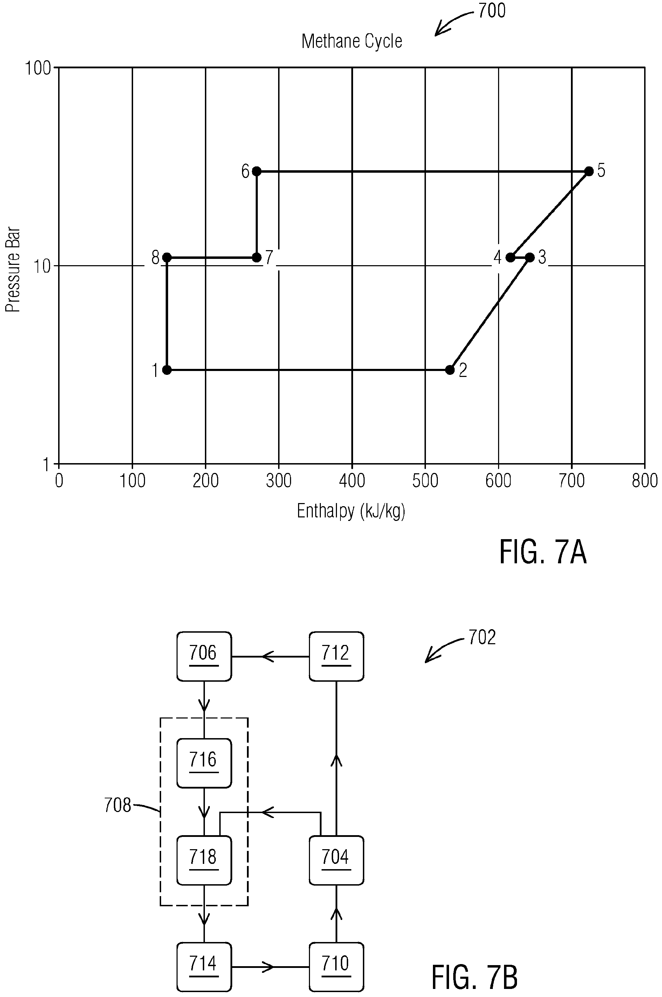

In one embodiment, the freezing stage or process 702 is represented by a line with points 1 through 8 in the enthalpy diagram of the cryogenic process 700 seen in FIG. 7A and mechanical diagram of the cryogenic cooling system 702 seen in FIG. 7B. The process begins with the heat exchange fluid 114 or refrigerant flowing or being pumped to an inlet of the evaporator 706 (point 1), where the heat exchange fluid 114 enters as a mixture of liquid and vapor. The evaporator 706 then transfers the heat exchange fluid 114 to its outlet (point 2), which only contains the heat exchange fluid 114 as a vapor, and is circulated to the compressor 708. The compressor 708 can be a single stage or multi-stage compressor, such as a scroll compressor. In this embodiment the compressor 708 is a multi-stage compressor with at least 2 stages of compression. The first compression stage 716 of the compressor 708 receives the heat exchange fluid 114 as a vapor from an outlet of the evaporator 706 as an input and produces an output of heat exchange fluid 114 as a vapor (point 3). Subsequently, there is a separation process in the flash tank 704 where the flash tank vapor is separated and routed to the compressor 708 where it mixes with the output of the first compressor or first compression stage 716 and is directed to the inlet of the second compression stage 718 (point 4). The heat exchange fluid 114 is compressed in the second compression stage 718 and directed to an inlet of the condenser 714 (point 5). The heat exchange fluid 114 flows through the condenser 714 and enters a first expansion valve 710 as a liquid (point 6). The heat exchange fluid 114 exits the first expansion valve 710 valve as a combination of liquid and vapor; and into the inlet of the flash tank (point 7). The heat exchange fluid 114 exits an outlet of the flash tank 704 as a liquid (point 8) and flows through the second expansion valve 712. The heat exchange fluid 114 exits the second expansion valve 712 as a mixture of liquid and enters the evaporator 706 to restart the cycle.

In an embodiment the method or process of depositing frozen carbon dioxide on a heat exchanger within a contactor assembly 100 during a desorption cycle can be summarized as follows: (1). Once a sorbent media within a contactor assembly 100 has reached a predetermined CO₂ loading, the contactor assembly 100 and sorbent filter assembly 106 are sealed or enclosed with the contactor lids 104. (2). Begin moderate heating of the sorbent media via the heat transfer passages (indirect heating) within the support structure or sorbent filter assembly 106 within the contactor assembly 100 at a temperature of about ~40 C while running the vacuum pump to maintain a pressure of ~0.05 bar. This will allow a small amount of water to evaporate and ensure that almost all air is evacuated/purged from the contactor assembly 100. (3). Where available, stored heat energy or heat recovery can be used to provide the heat energy required to increase temperature of the sorbent media. (4). The speed or load of the vacuum pump is reduced until pressure rises to ~0.15 bar in the contactor assembly 100. This will lead to a condensation temperature of ~50°C for steam within the contactor assembly 100. This pressure and temperature is maintained for a few minutes, between 2-3 minutes) or until the sorbent media is dry, free or nearly free of water vapor. (5.) Increasing the amount of indirect heating of the sorbent media until the sorbent media reaches a temperature within a range of 80-90°C and activating the cryogenic cooling system 702 so the CO₂ within the contactor assembly 100 can deposit on the cooling fins of the cryogenic heat exchanger 110. Maintaining the temperature of the cryogenic heat exchanger 110 at about -140°C for a specified amount of time (~1000 s) or until the sorbent media is sufficiently desorbed. During this process step the pressure will continuously drop down to about 100 Pa in the contactor assembly 100. The contactor lids 104 with cryogenic heat exchangers 110 can be moved to a carbon dioxide collection assembly 400. The contactor assembly 100 may be returned to atmospheric pressure to allow for the removal of the contactor lids 104 with cryogenic heat exchangers 110 and relocation to the carbon dioxide collection assembly 400. The contactor assembly 100 can be sealed with another contactor lid 104 prior to indirect cooling of the sorbent media, to prevent/reduce exposure of the sorbent media to atmospheric air while the sorbent media is still at elevated desorption temperatures. In other embodiments the contactor assembly 100 can be used as a carbon dioxide collection assembly 400. (6.) Cooling down the sorbent media with cold water or other suitable heat transfer fluid in the indirect heating passages within the support structure or sorbent filter assembly 106 and where available recovering the heat energy from the sorbent media in a (stratified) hot water tank or other known heat recovery method. (7). Once the sorbent media within the contactor assemblies 100 has reach a predetermined temperature, such as atmospheric temperature, the valves 406 can be opened to equalize pressure in the contactor assembly 100 with atmospheric air and the adsorption process can be started again.

Although various embodiments that incorporate disclosed concepts have been shown and described in detail herein, those skilled in the art can readily devise many other varied embodiments that still incorporate these disclosed concepts. Disclosed embodiments are not limited to the specific details of construction and the arrangement of components set forth in the description or illustrated in the drawings. Disclosed concepts may be implemented by other implementations, and of being practiced or of being carried out in various ways, which now would become apparent to one skilled in the art.

None of the description in the present application should be read as implying that any particular element, step, act, or function is an essential element, which must be included in the claim scope: the scope of patented subject matter is defined only by the allowed claims. Moreover, none of these claims are intended to invoke a means plus function claim construction unless the exact words "means for" are followed by a participle.

## Claims

1. A method of capturing carbon dioxide for use with a sorbent media in a pressure vessel (100) comprising the steps of:
configuring the sorbent media to receive a flow of carbon dioxide containing gas within a sorbent filter assembly (106),
configuring the pressure vessel (100) to include at least one cryogenic heat exchanger (110),
configuring the sorbent filter assembly (106) to include a plurality of indirect heat transfer channels,
absorbing carbon dioxide from the carbon dioxide containing gas within the sorbent media during an absorption cycle,
sealing the pressure vessel (100) at the end of the absorption cycle and lowering the pressure within the pressure vessel (100),
heating the sorbent media to a first temperature and operating a vacuum pump until a first pressure, maintaining the first temperature and the first pressure until a first amount of water vapor is released from the sorbent media to at least partially purge the pressure vessel (100),
raising the temperature of the sorbent media to a second temperature, raising the pressure within the pressure vessel (100) to a condensation pressure, maintaining the second temperature and condensation pressure until the sorbent media has released a second amount of water vapor,
initiating a desorption cycle by increasing the heat transfer rate of the plurality of indirect heat transfer channels to heat the sorbent media at a desorption heat rate, circulating at least a first heat transfer fluid through the at least one cryogenic heat exchanger (110) during the desorption cycle, depositing an amount of frozen carbon dioxide on a surface of the at least one cryogenic heat exchanger (110), maintaining the desorption heat rate and operation of the at least one cryogenic heat exchanger (110) until a desorption threshold is reached,
isolating and capturing the amount of frozen carbon dioxide during a carbon dioxide collection cycle,
cooling the sorbent media with the plurality of indirect heat transfer channels.

2. A method of capturing carbon dioxide for use with a sorbent media comprising the steps of:
configuring the sorbent media to receive a flow of a carbon dioxide containing gas within a pressure vessel (100),
absorbing carbon dioxide from the carbon dioxide containing gas within the sorbent media during an absorption cycle,
configuring the pressure vessel (100) to be sealed with at least one lid (104),
configuring the at least one lid (104) to include at least one cryogenic heat exchanger (110),
releasing an amount of carbon dioxide from the sorbent media during a desorption cycle,
circulating a first heat transfer fluid through the at least one cryogenic heat exchanger (110),
configuring the temperature and pressure within the pressure vessel (100) to freeze an amount carbon dioxide on a surface of the at least one cryogenic heat exchanger (110) directly as a solid,
isolating and capturing the amount of frozen carbon dioxide during a carbon dioxide collection cycle.

3. The method of any of the proceeding claims further comprising the steps of:
configuring the at least one cryogenic heat exchanger (110) to include at least two independent heat exchangers,
flowing a first heat transfer fluid through a first heat exchanger (302) during the desorption cycle to freeze an amount of carbon dioxide,
flowing a second heat transfer fluid through a second heat exchanger (304) during the carbon collection cycle to heat the frozen carbon dioxide and recover an amount of the heat energy from the frozen carbon dioxide.

4. The method of any of the proceeding claims further comprising the steps of:
configuring the at least one lid (104) to be moved to a carbon dioxide collection assembly (400) after the desorption cycle,
configuring the carbon dioxide collection assembly (400) to include an expansion chamber (402),
sealing the at least one lid (104) against the expansion chamber (402),
configuring the at least one cryogenic heat exchanger (110) to heat the amount of frozen carbon dioxide during a collection cycle to create an amount of carbon dioxide gas within the carbon dioxide collection assembly (400),
configuring a valve (406) to operate and send the amount of carbon dioxide gas out the carbon dioxide collection assembly (400) via the piping (404) to a carbon dioxide storage container after a predetermined set point.

5. The method of any of the proceeding claims further comprising the steps of:
configuring the second heat transfer fluid and second heat exchanger 304 to recover the heat energy from the amount of frozen carbon dioxide and first heat exchanger 302.

6. The method of any of the proceeding claims wherein the at least one cryogenic heat exchanger (110) is at -140°C during the desorption cycle.

7. The method of any of the proceeding claims wherein a desorption pressure within the pressure vessel (100) is continuously reduced until a value of about 100 Pa is reached during the desorption cycle.

8. The method of any of the proceeding claims wherein the first heat transfer fluid is methane.

9. The method of any of the proceeding claims wherein the second heat transfer fluid is methane.

10. The method of claim 5 further comprising the steps of:
configuring the first heat exchanger (302) of a first pressure vessel (100) to supply an amount of heat energy for the desorption cycle of a second pressure vessel (100) by recovering the heat energy of the first pressure vessel (100) by circulating the second heat transfer fluid into the second heat exchanger (304) of the first pressure vessel (100) and then circulating the second heat transfer fluid into the first heat exchanger (302) of the second pressure vessel (100).

11. The method of claim 1 wherein the first temperature is 40°C and the first pressure is ~0.05bar(a).

12. The method of claim 1 wherein the second temperature is 50°C and the condensate pressure is ~0.15 bar(a).

13. The method of claim 1 wherein the desorption heat rate raises the temperature of the sorbent media to between 80-90°C during the desorption cycle.
